# NEUE EUROPÄISCHE PATENTSCHRIFT

(11) **EP 2 824 257 B2**
(45) Veröffentlichungstag und Bekanntmachung des Hinweises auf die Entscheidung über den Einspruch: **15.11.2023**
(45) Hinweis auf die Patenterteilung: 16.08.2017
(21) Anmeldenummer: 14165927.6
(22) Anmeldetag: 25.04.2014
(51) Int. Cl.: F03D 13/10, E04H 12/08, F03D 13/20

(54) **Verfahren zur Herstellung und zum Errichten eines Rohrturmbauwerks**
Method for preparation and erection of a tubular tower structure
Procédé de fabrication et de montage d'une construction à mât tubulaire

(30) Priorität: 04.07.2013 DE 102013107059
(43) Veröffentlichungstag der Anmeldung: 14.01.2015
(73) Patentinhaber: SIAG Industrie GmbH, 04347 Leipzig (DE)
(72) Erfinder: Taterra, Hermann-Josef, 19073 Wittenförden (DE); Kaiser, Axel, 06847 Dessau-Roßlau (DE)
(74) Vertreter: HGF

(56) Entgegenhaltungen:
- EP-A1- 1 606 514
- EP-A2- 2 149 703
- EP-A2- 2 354 379
- DE-A1- 2 947 355
- DE-A1-102009 055 726
- DE-A1-102011 077 428
- DE-A1-102011 077 428
- DE-B- 1 099 824
- DE-T2- 60 317 372
- DE-U1- 20 321 855
- DE-U1-202011 001 695
- JP-A- S6 471 973
- JP-A- S6 471 973
- JP-A- H07 310 460
- JP-A- H08 132 232
- JP-A- H08 132 275
- KR-A- 20120 073 785
- KR-A- 20120 073 785
- US-A- 1 765 946
- US-A- 1 965 966
- US-A- 3 738 149
- US-A1- 2006 272 244
- US-B1- 6 715 243
- US-B2- 8 322 757
- "DANSKE VINDMOLLER (1): PORTRAET AF MICON'S 250 KW MOLLE"

## Beschreibung

Die Erfindung betrifft ein Verfahren zum Errichten von Rohrturmbauwerken.

Rohrturmbauwerke sind bekannt, insbesondere als Träger von Windenergieanlagen. Hierbei ist es insbesondere bekannt, aus Stahlblech Rohrabschnitte zu fertigen und die Rohrabschnitte übereinander mit umlaufenden Schweißnähten zu einem Rohrturm zusammenzusetzen, welcher an seinem oberen Ende eine Windenergiegondel aufnimmt. Um die einzelnen Segmente miteinander zu verbinden ist es bekannt, diese entweder zu verschweißen oder mit aufeinanderliegenden, umlaufenden Flanschen so zu versehen, dass die aufeinander liegenden Flansche miteinander verschraubt werden können.

Darüber hinaus ist es bekannt, derartige Turmbauwerke aus Teilschalen auszubilden, wobei die Teilschalen an ihren Längskanten Flansche besitzen, mit denen diese Teilschalen aneinander geschraubt werden.

Aus der WO 2011/092235 A2 ist ein Windenergieanlagenturmsegment bekannt, welches auch als Mantelsegment ausgebildet ist und aus einem Stahlbetonkörper besteht, mit zwei Stößen zum Ansetzen an Stöße wenigstens eines weiteren Turmsegments und in den Stahlbetonkörper im Bereich jeden Stoßes wenigstens ein Verbindungskörper eingelassen und darin verankert ist zum Verbinden mit einem Verbindungskörper eines benachbarten Turmsegments und der Verbindungskörper ein im Wesentlichen parallel zum jeweiligen Stoß angeordnete Befestigungswandung aufweist zum Aufnehmen einer quer zum Stoß und quer zur Befestigungswandung gerichteten Zugbelastung. Bei einer solchen Vorrichtung ist von Nachteil, dass es relativ aufwendig ist, derartige Betonschalen zu gießen und zudem pass- und maßgenau herzustellen. Ferner ist der Rückbau derartiger Stahlbetontürme recht aufwendig und teuer.

Aus der DE 10 2010 039 796 A1 ist ein Turm mit einem Adapterstück sowie ein Verfahren zur Herstellung eines Turm mit dem Adapterstück bekannt, wobei hier ebenfalls ein unterer rohrförmiger Turmabschnitt aus Beton und ein oberer rohrförmiger Turmabschnitt aus Stahl ausgebildet ist. Derartige Hybridtürme werden derzeit für die Errichtung besonders hoher Windenergieanlagentürme bevorzugt, da mit dem Betonunterbau große Durchmesser möglich sind und auf die Unterbautürme in dieser Weise herkömmliche Windenergieanlagentürme oben aufgesetzt werden können, um größere Höhen und damit eine bessere Windausbeute zu erreichen. Hierbei ist jedoch nachteilig, dass der Rückbau eines Betonturms relativ aufwendig ist und der Montageaufwand für Betontürme relativ hoch ist, insbesondere durch die Betonanlieferung.

Aus der WO 2010/121630 A2 ist ein Turm für eine Windkraftanlage mit einer Mehrzahl von Eckstielen zur Bildung einer Maßkonstruktion bekannt, wobei die Eckstiele jeweils aus mehreren miteinander verbundenen Teilprofilen zusammengesetzt sind. Hierbei sind die Eckstiele jeweils aus mehreren miteinander verbundenen Teilprofilen so zusammengesetzt, dass Anschlussbereiche gebildet sind an benachbarten Teilprofilen, welche jedoch aus den Teilprofilen ausgebogen sind. Bei dieser Ausführungsform ist von Nachteil, dass hiermit präzises und schnelles Arbeiten erschwert wird.

Aus der DE 10 2009 058 124 B4 ist ebenfalls ein Betonunterbau für den Turm einer Windenergieanlage bekannt.

Aus der DE 10 2011 603 A1 ist ein Lastaufnahmemittel zum Anheben von schweren Komponenten oder Anlagenteilen, insbesondere Offshore-Anlagen bekannt.

Aus der DE 203 21 897 U1 ist eine Windturbine mit einem stationären vertikalen Mast oder Turm bekannt, an welchem der bewegliche Teil der Windturbine angeordnet ist, wobei der Mast zumindest teilweise aus vorgefertigten Wandteilen besteht, wobei mehrere benachbarte Wandteile ein im Wesentlichen ringförmigen Mastabschnitt ausbilden. Hierbei sind die Wandteile oder Segmente aus verstärktem Beton oder einem anderen steinartigen Material aufgebaut und bereits vorgefertigt. Die Befestigung der Betonelemente aneinander erfolgt mit Zuganfang.

Aus der DE 10 2011 001 250 A1 sind eine Vorrichtung und Verfahren für den Übergang zwischen einem Stahlturmabschnitt und einem vorgespannten Betonturmabschnitt bekannt.

Aus der DE 10 2011 077 428 A1 ist ein Windenergieanlagenturm bekannt mit einer Mehrzahl von vorgefertigten Turmsegmenten, welche jeweils einen oberen und unteren horizontalen Flansch aufweisen, wobei eines der Mehrzahl der Turmsegmente mindestens zwei Längsflansche aufweist, wobei jeder Längsflansch eine erste Seite zum Anlegen an eine erste Seite eines weiteren Längsflansches und eine zweite Seite aufweist, welche an die Mantelfläche seitlich angeschweißt ist, wobei die zweite Seite der ersten Seite gegenüberliegt.

Aus der DE 11 2010 005 382 T5 ist ein Wandabschnitt für einen Windkraftanlagenturm bekannt, wobei der Wandabschnitt ein erstes Wandsegment und ein zweites Wandsegment umfasst, sowie ein Verbindungselement, welches einen ersten Oberflächenabschnitt der an dem ersten Wandsegment angebracht ist und sich in eine erste Richtung erstreckt, einen zweiten Oberflächenabschnitt, der an dem zweiten Wandsegment angebracht ist und sich in eine zweite Richtung erstreckt und ein Zwischenabschnitt mit an sich quer zu der ersten Richtung und quer zu der zweiten Richtung erstreckenden Zwischenoberflächenabschnitt umfasst, wobei das Verbindungselements hierdurch t-förmig ausgebildet ist und auf eine entsprechende Wandung bzw. zwei aneinander stoßende Wandung aufgesetzt wird und mit Schraubbolzen, die durch die Wandung hindurch ragen, darauf befestigt wird.

Aus der DE 203 21 855 U1 ist ein Rohrturmbauwerk bekannt, welches aus Rohrturmbauwerksschalen ausgebildet wird, wobei die Rohrturmbauwerksschalen einzeln erzeugt werden und nach dem Erzeugen der Rohrturmbauwerksschalen an den Längskanten dieser Schalen Flansche aufgeschweißt werden. Das Bauwerk wird sodann aus den Schalen zusammengesetzt und an den Flanschen verschraubt.

Aufgabe der Erfindung ist es ein Verfahren zu schaffen, mit dem derartige Turmbauwerke schneller und mit höherer Präzision und Passgenauigkeit errichtet werden können.

Die Aufgabe wird mit einem Verfahren mit den Verfahrensschritten des Anspruchs 1 gelöst. Vorteilhafte Weiterbildungen sind in den hiervon abhängigen Unteransprüchen gekennzeichnet.

Ein Turmbauwerk erfindunggemäß errichtetes dient insbesondere als Unterbauturm, um einen herkömmlichen Turm zur Aufnahme von Windenergieanlagen aufzusetzen und hierdurch eine größere Höhe und damit bessere Winderreichbarkeit zu erzielen.

Für größere Höhen von derartigen Turmbauwerken ist es notwendig den Turmquerschnitt zu vergrößern, da nur dann die erforderliche Stand- und Knicksicherheit erzielt werden kann. Üblicherweise werden derartige Türme aus im Querschnitt kreisringförmigen Turmsegmenten erstellt, übereinander gesetzt und miteinander verbunden. Aufgrund der üblichen Brückenhöhe in Deutschland lassen sich sehr großen Turmquerschnitte aus einteiligen Rohrabschnitten oder Rohrsegmenten nicht mehr realisieren.

Hierdurch ist es notwendig, um die Durchfahrthöhe einzuhalten, derartige, sehr breite Türme mit mehr als 4,5 m Durchmesser am Fuß aus Teilschalen, d.h. Ringsegmenten zu einem vollständigen Ring zusammenzusetzen und - so notwendig - mehrere dieser Ringe übereinanderzusetzen.

Grundsätzlich ist es bekannt, derartige sogenannte längsorientierte Schalen zu erstellen und diese Schalen am Einbauort zu einem Rohr zusammenzusetzen. Es hat sich hierbei jedoch herausgestellt, dass die Präzision und die Toleranzen derart groß sind, dass die Montage sehr oft verzögert wird und unnötig erschwert wird.

Erfindungsgemäß wird das Rohrturmbauwerk zunächst vollständig am Herstellungsort hergestellt und errichtet, so dass das Rohrturmbauwerk in Teillängen, die noch transportierbar sind oder, bei einer noch transportierbaren Länge, in seiner vollen Länge errichtet wird. Hierzu werden aus Stahlblech entsprechende Bahnen beziehungsweise Platinen gefertigt, welche dann gerollt werden, so dass sie mit einer Längskante aneinander stoßen und ein Ringsegment oder ein Rohrsegment bilden. Dieses Rohrsegment wird dann an dieser Stoßkante verschweißt. Weitere Rohrsegmente werden hierauf aufgesetzt und ebenfalls verschweißt bis ein vollständiges Rohrturmbauwerk ausgebildet ist. In dieses Rohrturmbauwerk werden anschließend, entsprechend einer gewünschten Anzahl von Teilschalen, axial verlaufend Flansche von außen auf die Turmbauwerkswandung oder von innen auf die Turmbauwerkswandung aufgeschweißt, wobei immer zwei Flansche nebeneinander liegend ein Flanschpaar bilden und aufgeschweißt werden. Bei einem Rohrturmbauwerk, welches aus vier Teilschalen besteht, werden somit insgesamt acht Flansche in vier Paaren außen oder innen aufgeschweißt. Anschließend erfolgt eine Trennung des Rohres zwischen den jeweiligen Flanschpaaren in die entsprechenden Teilschalen. Die Teilschalen werden anschließend zur Baustelle transportiert und dort entsprechend wieder zu einem Rohrturmbauwerk zusammengestellt und durch die Flansche hindurch miteinander verbunden.

Bei der Erfindung ist von Vorteil, dass die Flansche und die Verschweißung der Flansche mit der Rohrturmbauwerkswandung au-βerordentlich präzise und nachvollziehbar genau ist. Zudem können die Flansche an dem gesamten Rohrturmbauwerk in besonders guter Weise ausgerichtet und befestigt werden, um eine Schweißung herbeizuführen. Ferner ist von Vorteil, dass diese Schweißungen und das anschließende Trennen des Rohrturmbauwerks in die Schalenelemente unter nachvollziehbaren Bedingungen am Herstellort erfolgt, wobei eine entsprechende Nachprüfung am Herstellart erfolgen kann.

Am Einsatzort muss lediglich aus z.B. vier Schalen der gesamte Turm zusammengestellt und verschraubt werden.

Zudem hat sich herausgestellt, dass bei der erfindungsgemäßen Methode, wonach die Flansche von innen oder außen auf die Wandung aufgeschweißt werden, sich eine höhere Stabilität ergibt als bei Flanschen, die an die Stoßfläche angeschweißt werden.

Die Erfindung wird anhand einer Zeichnung beispielhaft erläutert. Es zeigen dabei
- Fig. 1a: ein ringförmiges Rohr mit einer Längsschweißnaht als Ausgangsbauwerk;
- Fig. 1b: das Rohr nach Fig. 1a mit schematisch dargestellt aufgeschweißten Flanschen;
- Fig. 1c: die Situation nach der Trennung in zwei Turmbauwerksschalen zwischen den Flanschpaaren;
- Fig. 2: ein Rohrturmbauwerk mit innenliegenden Flanschen, die miteinander verbunden sind;
- Fig. 3: ein Rohrturmbauwerk mit außenliegenden Flanschen, die miteinander verbunden sind;

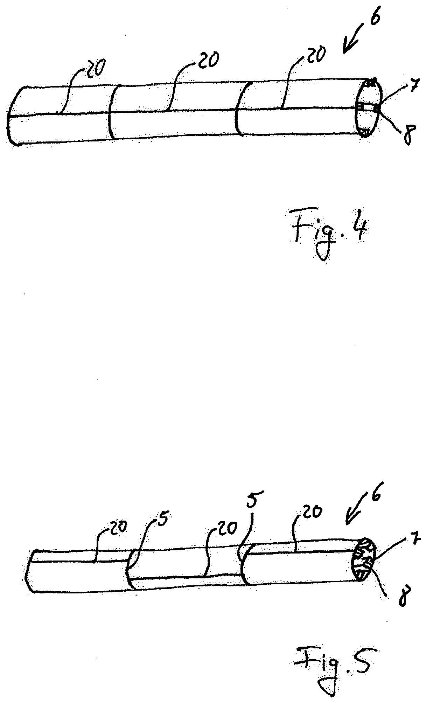

- Fig. 4: ein Rohrturmbauwerk aus mehreren Rohrabschnitten, wobei die Trennlinien bzw. Flansche fluchtend angeordnet sind;
- Fig. 5: ein Rohrturmbauwerk aus mehreren Rohrabschnitten mit versetzt zueinander verlaufenden Trennlinien bzw. Flanschen;

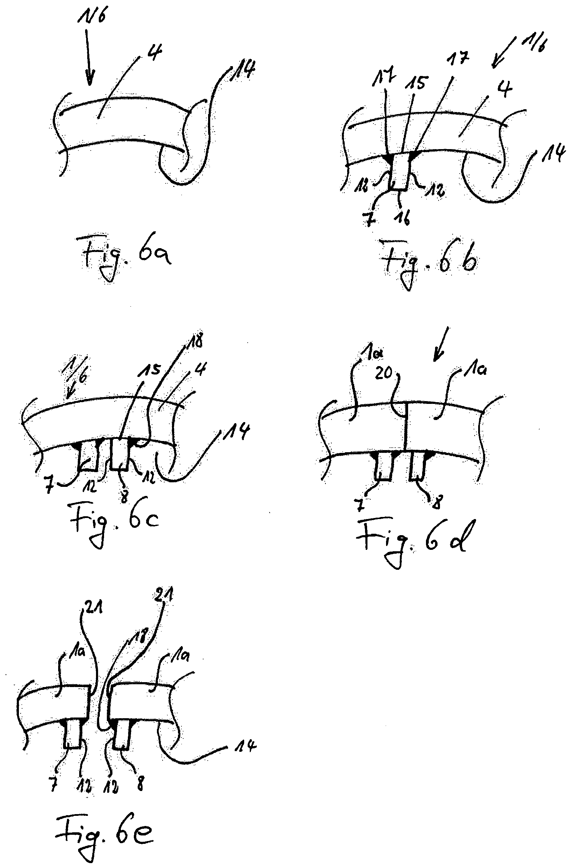

- Fig. 6a: ein Ausschnitt aus einer Rohrturmbauwerkswandung;
- Fig. 6b: die Wandung nach Fig. 6a mit einem ersten aufgesetzten und verschweißten Flansch;
- Fig. 6c: die Wandung mit einem zweiten aufgesetzten und entlang einer Stoßkante verschweißten Flansch;
- Fig. 6d: die Trennlinie in der Wandung des Rohrturmbauwerks zwischen den beiden Flanschen;
- Fig. 6e: das zwischen den Flanschen getrennte Rohrturmbauwerk mit einer auf den zweiten Flansch aufgesetzten zweiten Kehlnaht entlang der Stoßkante;

- Fig. 7a-f: den Anschluss der Flansche als Vollanschluss;
- Fig. 8a-d: Flansche mit Futterblechen;
- Fig. 9: das Rohrturmbauwerk in einer Ansicht von außen aus mehreren Rohrsegmenten, die miteinander verschweißt sind;
- Fig. 10: den Fuß des Rohrturmbauwerkes mit einem doppelten Ringflansch nach innen und nach außen zur Befestigung auf einem Fundament;
- Fig. 11: den Ringflansch mit der Rohrturmbauwerkswandung und einem Teil eines längs verlaufenden Flansches in einer teilgeschnittenen Ansicht;
- Fig. 12: den Kopfbereich des Rohrturmbauwerks mit einem innen liegenden Kreisflansch zur Befestigung weiterer Rohrelemente;
- Fig. 13: den Kopfbereich des Rohrturmbauwerks in einer teilgeschnittenen Ansicht;
- Fig. 14: die Ansicht von innen auf eine Rohrturmbauwerksschale mit je einem längs verlaufenden Flansch an den Längskanten;
- Fig. 15: die Rohrturmbauwerksschale nach Fig. 10 in einer teilgeschnittenen Draufsicht auf den Fußbereich mit einem innen und außen verlaufenden Ringflansch;
- Fig. 16: den Kopfbereich der Rohrturmbauwerksschale mit einem innen verlaufenden Flansch.

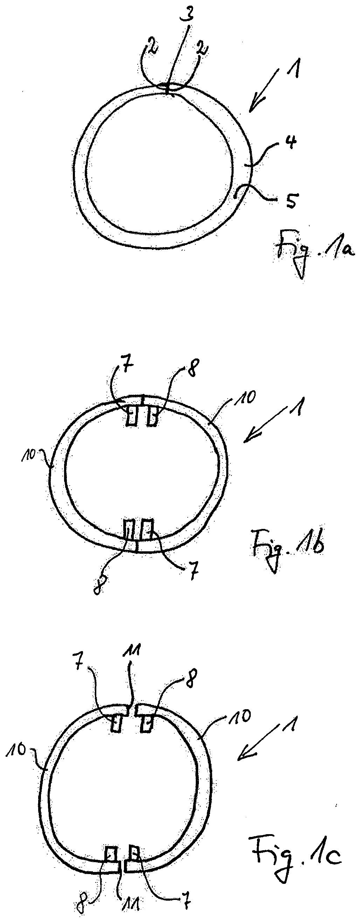

Zur Herstellung und Errichtung eines Rohrturmbauwerkes wird Stahlblech einer gewünschten Breite, Länge und Dicke so gebogen, dass es ein kreisrundes Rohr oder einen kreisrunden Rohrabschnitt bildet. Für den Fall sehr großer Durchmesser können einzelne Rohrabschnittsegmente mit mehreren längsverlaufenden Schweißnähten zu einem Rohrabschnitt (Fig. 1a) verschweißt werden. Ein solcher Rohrabschnitt 1 ist kreisringförmig im Querschnitt ausgebildet und besitzt an zumindest zwei zueinander weisenden axialen Kanten 2 eine axiale, diese verbindende Schweißnaht 3. Hierdurch wird eine kreisförmige Rohrwandung 4 gebildet, welche je eine radiale umlaufende Stirnfläche 5 besitzt. Die axiale Länge des Rohrabschnitts 1 wird im Wesentlichen durch die Breite des gebogenen Stahlblechs und die zur Verfügung stehenden Biegeeinrichtungen begrenzt.

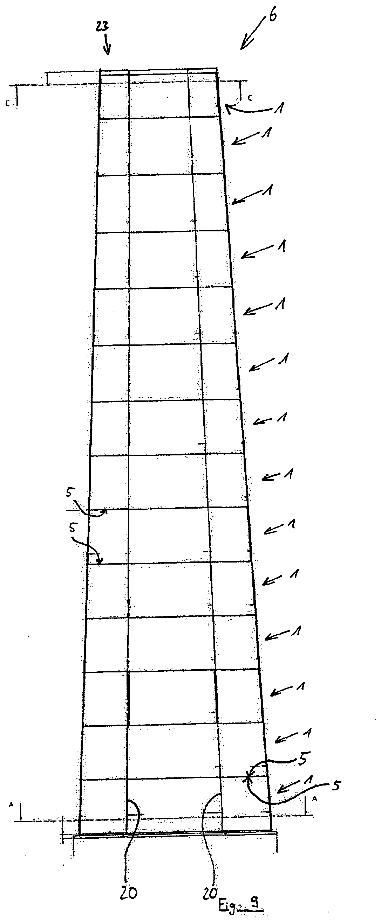

Die Rohrabschnitte 1 sind insbesondere konisch ausgebildet, so dass der Durchmesser an einem axialen Ende größer ist als der am gegenüberliegenden axialen Ende. In dieser Weise lassen sich aus einer Mehrzahl derartiger konischer Rohrabschnitte 1 konisch verlaufende Türme (Fig. 9) erzielen. Hierbei besitzen die einzelnen Rohrabschnitte 1 beispielsweise eine Höhe von 1,5 bis 3 m, wobei ein Rohrabschnitt 1 am Fuß eines Rohrturmbauwerkes 6 (Fig. 9) einen Durchmesser von beispielsweise 7 m und im Bereich des Kopfes einen Durchmesser von 4,5 m besitzt. Zum Errichten des Rohrturmbauwerks 6 werden die konischen Rohrabschnitte 1 übereinander gesetzt und im Bereich ihrer umlaufenden Kanten 5 umlaufend verschweißt.

Das erfindungsgemäße Verfahren sieht vor, einen oder mehrere axial miteinander verschweißte Rohrabschnitte 1 zu einer transportablen Länge zusammenzufassen, wobei bei geeigneten Transporteinrichtungen auch ein komplettes Rohrturmbauwerk 6 entsprechend aus Rohrabschnitten 1 zusammengestellt sein kann. Um ein derartiges Rohrturmbauwerk 6 herzustellen, zu transportieren und zu errichten, ist es notwendig ein solches Rohrturmbauwerk 6 längs in Rohrturmbauwerklängsschalen 6a aufzutrennen, da ansonsten ein Transport über die Straße nicht sichergestellt werden kann.

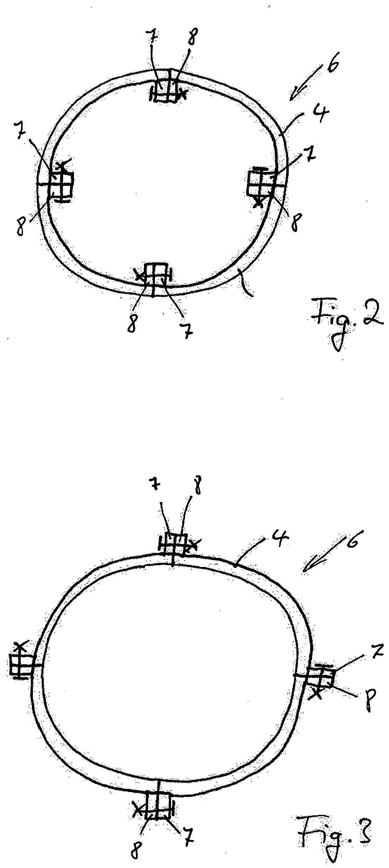

Hierfür wird das Rohrturmbauwerk 6 oder einer Mehrzahl von axial aufeinanderfolgenden Rohrabschnitten 1 im Bereich gewünschter Trennungslinien 20 zunächst mit einem Paar von längs verlaufenden Flanschen 7, 8 versehen. Die Flansche 7, 8 können dabei sowohl außen (Fig. 3) als auch innen (Fig. 2) entlang geplanter Trennlinien an der Rohrwandung 4 angeordnet sein.

Im einfachsten Fall weist ein Rohrturmbauwerk 6 bzw. ein Rohrabschnitt 1 zwei Trennlinien 20 auf, so dass er in zwei Halbschalen 1a auftrennbar ist, wobei je ein Flansch 7, 8 entlang einer durch das Auftrennen gebildeten axialen Kante 11 verbleibt.

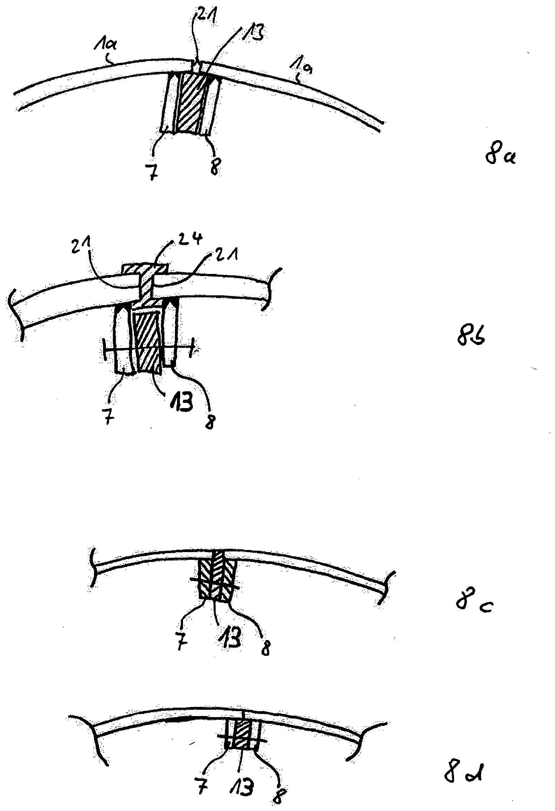

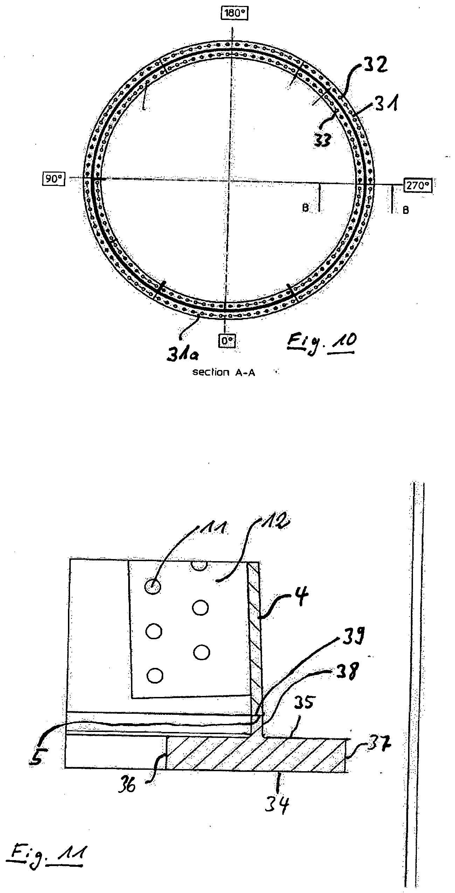

Zur Montage der Flansch 7, 8 können die Flansche 7, 8 miteinander verbunden sein, diese Verbindung kann eine Schraubverbindung durch vorhandene Schraublöcher 11 (Fig. 11) sein, eine Nietverbindung sein oder eine Heftung mit Schweißpunkten oder kurzen Schweißnähten. Hierbei können die Flansche mit Breitseiten 12 aneinander liegend ausgebildet sein, jedoch können auch sogenannte Futterbleche oder andere Abstandhalter 13 zwischen den Flanschen 7, 8 vorhanden sein (Fig. 8a bis 8d). Hierdurch wird eine gute axiale Ausrichtung und Flucht der Flansche sichergestellt.

Bei einer ersten möglichen Ausführung der Anordnung der Flansche 7, 8 an der Innenfläche 14 einer Wandung 4 eines Rohrturmbauwerks 6 beziehungsweise eines Rohrabschnitts 1 wird ein erster Flansch 7, der im Querschnitt rechteckig ist und somit zwei parallel zueinander verlaufende Schmalseiten 15, 16 und zwei parallel verlaufende Breitseiten 12 besitzt, mit einer Schmalseite 15 an der Innenfläche 14 der Wandung 4 angesetzt und fixiert. Dieser Flansch wird anschließend zum Beispiel mit Kehlnähten 17 an der Fläche 14 verschweißt. Die Kehlnähte können dabei den Winkel zwischen den Flächen 12 und 14 ausfüllen. Es können zur Aufnahme der Nähte jedoch auch entsprechende Abschrägungen im Bereich zwischen den Wandungen beziehungsweise Flächen 12 und der Stirnfläche 15 des Flansches vorhanden sein, so dass die Nähte 17 nicht vorstehen. Anschließend wird der zweite Flansch 8 parallel zum ersten Flansch 7 an der Fläche 14 angesetzt und mit zumindest einer Kehlnaht 18 an der Fläche 14 verschweißt. Die der Kehlnaht 18 gegenüber liegende Breitfläche 12 des Flansches 8 ist für eine Verschweißung in diesem Fall nicht oder nur schlecht zu erreichen. Um nun die entsprechenden Halbschalen 1a aus dem Rohrabschnitt 1 zu fertigen, wird entlang einer gewünschten Trennlinie die zwischen den Flanschen 7, 8 verläuft, eine Trennung 20 durchgeführt und anschließend werden die beiden Schalen 1a voneinander getrennt, so dass der bislang nicht verschweißte Bereich des Flansches 8 zugänglich ist und ebenfalls mit einer Naht an der Fläche 14 verbunden werden kann. Die sich durch die Trennung ergebenden Kanten 21 der Teilschalen 1a sowie die zueinander weisenden Flächen 12 der Flansche 7, 8 können hierbei radial fluchtend ausgebildet sein. Die Flansche 7, 8 können jedoch auch mit einem geringen Abstand bezüglich der Kanten 21 von diesen etwas zurückgesetzt an der Fläche 14 angeordnet sein.

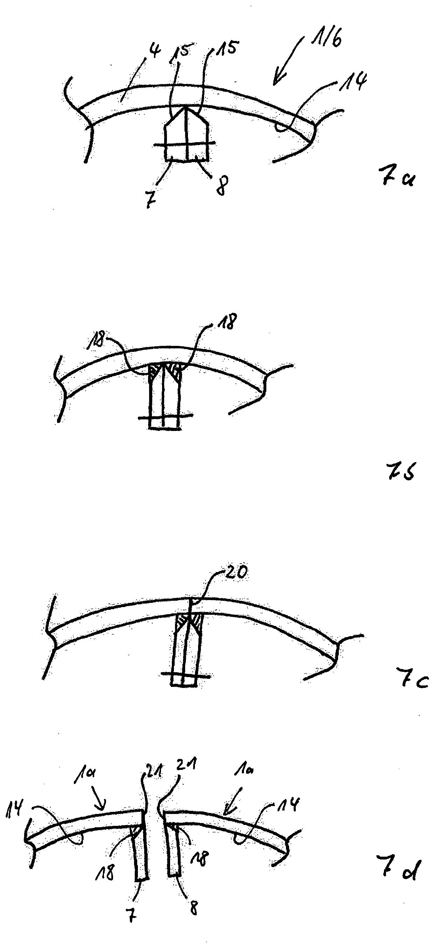

Bei einer weiteren vorteilhaften Ausführungsform werden die Flansche 7, 8 mit einem sogenannten Vollanschluss an der Fläche 14 befestigt (Fig. 7a bis 7f). Hierbei können die Flansche zur Befestigung bereits miteinander verbunden sein, insbesondere durch Schraublöcher 11 und mit ihren Flächen 12 aneinander liegend (Fig. 7a), gleichwohl können die Flansche auch einzeln angeordnet werden. Um den Vollanschluss zu gewährleisten besitzen die Flansche 7, 8 schräge Stirnflächen 15, so dass sie nur mit einem sehr schmalen Bereich an der Fläche 14 anliegen und sich ein Kerb zwischen den Flanschen 7, 8 und der Fläche 14 ergibt, wobei bei aneinander angeordneten Flanschen 7, 8 diese Kerben diametral voneinander wegweisend ausgebildet sind. Diese Kerben können nach dem Aufsetzen und Fixieren der Flansche an den Flächen 14 jeweils mit Schweißnähten 18 aufgefüllt werden, so dass der Vollanschluss gewährleistet ist. Anschließend erfolgt eine Trennung 20 beziehungsweise eine Trennschleifung oder thermische Trennung 20, so dass wieder Kanten 21 der Teilschalen 1a gebildet werden und der eine Flansch 7 bei der Einteilschale 1a, der andere Flansch 8 bei der anderen Teilschale 1a verbleibt.

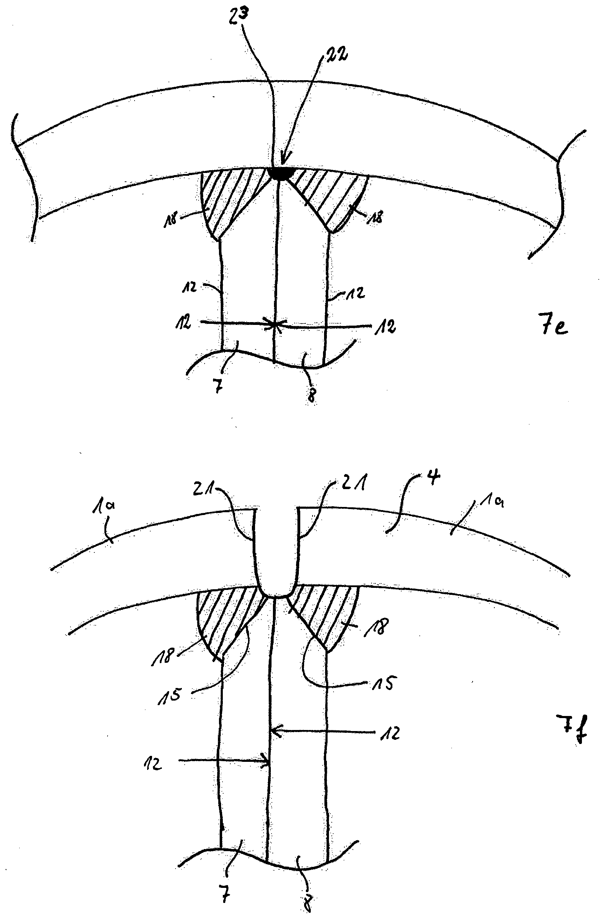

Insbesondere in dem Bereich, in dem die beiden Flächen 12 der Flansche aneinanderstoßen, beziehungsweise im Bereich des Kerbgrundes 22 kann sich beim Verschweißen mit Vollanschluss eine Schweißnahtwurzel 23 ausbilden, welche letztlich auch die beide Flansche 7, 8 miteinander verbindet (Fig. 7e).

Diese Schweißnahtwurzel 23 muss, um die beiden Teilschalen 1a voneinander zu trennen, entfernt werden. Dies wird zweckmäßigerweise durch die Trennung (Fig. 7f) erzielt, wobei die Trennung soweit durch die Wandung 4 des Rohrabschnitt 1 durchgeführt wird, dass die Schweißnahtwurzel 23 mit entfernt wird, worauf sich die Teilschalen 1a und damit auch die Flansch 7, 8 voneinander trennen lassen. Um den hierdurch entstandenen Spalt, der auch beim Zusammenschrauben der Flansche wieder auftreten würde, zu verschließen kann bei der Montage ein entsprechendes Futterblech oder eine Dichtung eingelegt werden (zwischen den Stirnkanten 21).

Derartige Futterbleche oder Dichtungen werden zwischen den Flanschen 7, 8 beziehungsweise den Kanten 21 der Halbschalen 1a angeordnet, um Toleranzen auszugleichen beziehungsweise eine Dichtung zwischen den Kanten 21 beziehungsweise den Flanschen 7, 8 herbeizuführen. Die Futterbleche können sich dabei (Fig. 8c) zwischen den Flanschen 7, 8 und zwischen den Kanten 21 befinden und sich von den Flanschen 7, 8 durch die Wandung 4 der Teilschalen 1a nach außen erstrecken. Stoßen die Kanten 21 in montiertem Zustand fest aneinander (Fig. 8d) können Futterbleche zwischen den zu den Kanten 21 zurückgesetzten Flanschen 7, 8 vorhanden sein.

Darüber hinaus können H beziehungsweise Doppel-T Dichtelemente 24 zwischen den Kanten 21 angeordnet sein, wobei diese auch einstückig mit den Futterblechen 13 ausgebildet sein können.

Ein entsprechendes Rohrturmbauwerk 6 (Fig. 9) besitzt somit in errichtetem Zustand eine Mehrzahl von Trennlinien 20, mit welchen die Teilschalen 1a bestehend aus den entsprechend verbundenen Segmenten der Rohrabschnitte 1, zusammengefügt sind.

Zur Verbindung eines solchen Rohrturmbauwerks 6 mit weiteren Rohrturmbauwerken oder einem üblichen Rohrturm zur Aufnahme einer Windenergieanlage besitzt das Rohrturmbauwerk an seiner durchmessergeringeren Stirnfläche 23 einen Ringflansch 24. Der Ringflansch 24 besteht vorzugsweise aus Ringflanschsegmenten 24a, welche in den Teilschalen 1a an einem Ende abschließend eingeschweißt sind.

Ein derartiger Ringflansch 24 kann sowohl an einem schmaleren Ende des Rohrturmbauwerks 6 als auch an einem breiteren Ende des Rohrturmbauwerks 6 vorgesehen sein, insbesondere wenn das Rohrturmbauwerk 6 Bestandteil eines größeren Rohrturmbauwerks (nicht gezeigt) ist und zwischen einem sich darunter befindlichen breiteren Teil und einem darüber befindlichen schmaleren Teil angeordnet ist.

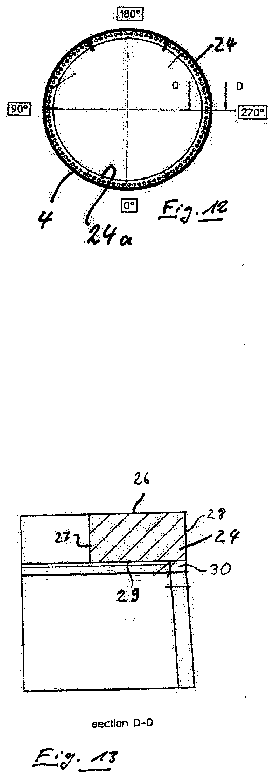

Ein derartiger Ringflansch (Fig. 13) ist im Wesentlichen ringförmig ausgebildet mit einer inneren Umfangsfläche 27 einer äußeren Umfangsfläche 28, einer Stirnfläche 26 und einer zu dieser parallel verlaufenden Stirnfläche 29. In Verlängerung einer äußeren Umfangswandung 28 über die Stirnfläche 29 hinaus ist ein Anschlussring 30 am Flansch 24 ausgebildet, welcher bezüglich der radialen Ausdehnung eine Dicke besitzt, die in etwa der Dicke einer Wandung eines Rohrturmbauwerks entspricht und wird mit diesem Ring an der Wandung angeschweißt.

Wird das Rohrturmbauwerk 6 als Zwischenteil in einem größeren Rohrturmbauwerk verwendet, ist ein derartiger Flansch 24 auch im Bereich des größten Durchmessers des Rohrturmbauwerks an der Wandung angeordnet.

Bei einer Ausführungsform, bei der das Rohrturmbauwerk 6 an einem Fundament befestigt wird, ist im Bereich der größten Breite, d. h. bodenseitig an der Wandung des Rohrturmbauwerks 6 ein Ringflansch 31 vorgesehen. Der Flanschring 31 ist als Doppelring mit zwei konzentrisch verlaufenden Lochreihen 32, 33 ausgebildet, wobei die Lochreihen 32, 33 bezüglich der Längserstreckung eines Rohrturmbauwerks axial verlaufend angeordnet sind. Hierdurch bildet der Flanschring 31 eine ebene Aufstandsfläche 34, eine zu dieser parallel verlaufende Fläche 35 sowie eine innere umlaufende Stirnfläche 36 und eine äußere umlaufende Stirnfläche 37 aus. Zwischen den Stirnflächen 36, 37 in etwa in der Radialmitte der Fläche 35 steht ein Ringsteg 38 von der Fläche 35 vor, wobei der Ringsteg 38 eine freie, umlaufende radiale Kante 39 besitzt. Der Ringsteg 38 hat dabei eine Stärke, die der Stärke der Wandung 4 eines Rohrturmbauwerks entspricht. Mit der Kante 39 kann der Ringsteg 38 an eine entsprechende Kante 40 der Rohrturmbauwerkswandung 4 angeschweißt werden.

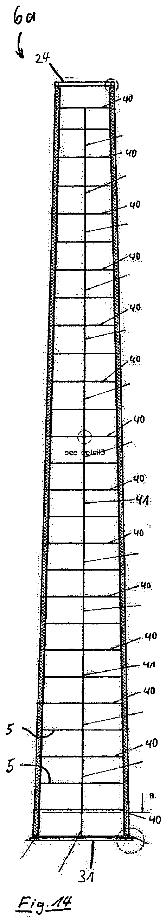

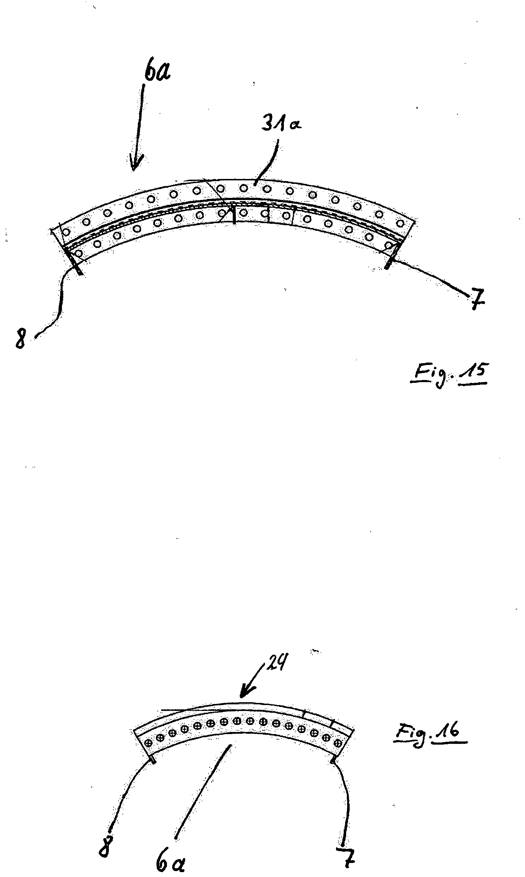

Eine Teilschale 6a eines entsprechenden Rohrturmbauwerks 6 (Fig. 14) ist im Querschnitt ein Kreisringsegment (Fig. 15 teilgeschnitten), welches üblicherweise konisch verläuft, so dass das Kreisringsegment sich von einem unteren Bereich (Fig. 15) zu einem oberen Bereich (Fig. 16) verjüngt.

Das Rohrturmbauwerksegment 6a besitzt an axialen Kanten in bereits beschriebener Weise je einen Flansch 7, 8 zur Verbindung mehrerer Segmente, wobei die Flansche 7, 8 entsprechend über Reihen von Löchern verfügen durch die hindurch die Flansche 7, 8 miteinander verbunden werden können. Die Verbindung kann grundsätzlich durch Schrauben, Nieten und Schweißungen erfolgen. Als günstig haben sich sogenannte Schließringbolzen erwiesen, welche letztlich Schrauben auf ein Gewinde aufgesetzten Presshülsen sind und wartungsfrei beziehungsweise wartungsarm sind.

Ein in der Gestalt hergestelltes Rohrturmbauwerkssegment beziehungsweise eine derart hergestellte Rohrturmbauwerksschale 6a besitzt an den oberen und unteren Enden die bereits angesprochenen Flansche 24, 31. Die Schalen 6a werden somit aus einer Mehrzahl von Teilschalen 1a beziehungsweise Rohrabschnitten 1a ausgebildet, wobei die Rohrabschnitte 1a jeweils mit Stoßkanten 5 aufeinander gesetzt und miteinander verschweißt sind. In etwa in der axialen Mitte zwischen zwei aufeinanderstoßenden Stoßkanten 5 können zur Stabilisierung und gegebenenfalls zum Anordnen von Bauteilen innerhalb eines Turmes Ringspanten 40 beziehungsweise Ringspannsegmente 40 eingeschweißt seien. Zudem kann in der radialen Mitte zwischen den beiden Flanschen 7, 8 ein Längsspant 41 eingeschweißt sein, der sich über die gesamte Länge oder ein Teillänge der Teilschale 6a erstreckt.

Bei der Erfindung ist von Vorteil, dass ein Rohrturmbauwerk 6 aus Rohrabschnitten 1a, 6a, welche insbesondere konische sind, vollständig in einer entsprechenden Fabrikationseinrichtung hergestellt wird. Unter vorbestimmten Bedingungen, welche geringster Toleranzen zulassen, werden Flansche, welche sich längs beziehungsweise axial erstrecken, außen oder innen an die Rohrwandung 4 aufgeschweißt und anschließend das Rohrturmbauwerk zwischen den Flanschen in zumindest zwei Teilschalen 6a vorzugsweise mehr Teilschalen 6a insbesondere vier bis vierzehn Teilschalen 6a getrennt, welche gut, auch auf Straßen, zu transportieren sind.

An einer Errichtungsstelle des Rohrturmbauwerks werden die Teilschalen wieder miteinander verbunden, wobei dies in besonders einfacher Weise geschieht, da die Teilschalen absolut passgenau aufeinander abgestimmt sind. Im Gegensatz zu herkömmlichen Errichtungskonzepten, bei denen ein solches Rohrturmwerk aus einzelnen Rohrschüssen beziehungsweise Rohrabschnitten zusammengestellt und verschweißt wird, kann die Montage eines solchen Rohrturmbauwerks in einem Bruchteil der Montagezeit geschehen, wobei zusätzlich ein Rohrturmbauwerk mit sehr großen Durchmesser insbesondere Durchmessern am Fuß < 7 m realisiert werden kann.

Insbesondere ist von Vorteil, dass mit einem solchen Rohrturmbauwerk in einfacher, kostengünstiger und schnell zu montierender Weise ein sehr hoher Unterbau für bekannte Rohrtürme, welche Windenergieanlagen tragen, erstellt werden kann, so dass übliche Windenergieanlagen höher in den Wind gebracht werden können und damit die Effektivität gesteigert werden kann.

## Patentansprüche

1. Verfahren zum Errichten eines Rohrturmbauwerkes, wobei
- Stahlblech zu einem im Wesentlichen im Querschnitt ringförmigen Rohrabschnitt (1a, b) gebogen wird und entlang einer Längskante (2) zu einem geschlossenen Rohr(1a, b) verschweißt wird,
- an das Rohr (6) entlang geplanter axialer Trennlinien je ein Paar axialer Flansche (7, 8) innen oder außen auf die Rohrwandung aufgeschweißt wird, wobei je ein Flanschpaar (7, 8) in Umfangsrichtung nebeneinander liegend axial verlaufend angeordnet ist,
- wobei entlang geplanter Trennlinien (20), welche zwischen zwei Flanschen (7, 8) eines Flanschpaares verlaufen, der Rohrkörper (6) getrennt wird, sodass zumindest zwei Teilschalen (6a) des Rohrkörpers gebildet werden, welche entlang axialer Kanten (11) je einen Flansch (7, 8) besitzen und
- zur Errichtung des Turmbauwerks die Teilschalen (6a) mittels der Flansche eines Flanschpaares aneinander angeordnet werden und durch die Flansche (7, 8) je eines Flanschpaares hindurch zu einem Rohrkörper verbunden werden.

2. Verfahren nach Anspruch 1, **dadurch gekennzeichnet, dass** eine Mehrzahl von im Querschnitt ringförmigen Rohrabschnitten (1a) entlang gemeinsamer in Umfangsrichtung verlaufender und anstoßender radialer Kanten (5) zu einem sich längs erstreckenden Rohrkörper (6) verbunden werden.

3. Verfahren nach Anspruch 1 oder 2,**dadurch gekennzeichnet, dass** die Rohrabschnitte (1a) so angeordnet werden, dass ihre jeweiligen Flanschpaare bzw. Flansche und/oder Längsschweißnähte in axialer Richtung versetzt und nicht fluchtend zueinander angeordnet sind.

4. Verfahren nach einem der vorhergehenden Ansprüche, **dadurch gekennzeichnet, dass** zwischen den Flanschen (7, 8) einer Teilschale (6a) Ringspanten/Ringspantsegmente (40) und/oder Ringflansche oder Ringflanschsegmente (24, 31) angeordnet werden, wobei die Ringflansche (24, 31) zur Verbindung axial aufeinander folgender Rohrabschnitte (6) angeordnet sind und mit radial verlaufenden Umfangskanten fluchten.

5. Verfahren nach einem der vorhergehenden Ansprüche, **dadurch gekennzeichnet, dass** zunächst ein Flansch (7) eines Flanschpaares (7, 8) auf eine Innen- oder Außenseite (14) der Rohrwandung (4) aufgesetzt und mit einer ersten Kehlnaht (18) entlang einer Stoßkante mit dem Rohrkörper verbunden wird und dann die gegenüberliegende Stoßkante mit einer Kehlnaht (18) mit dem Rohrkörper verschweißt wird und anschließend der zweite Flansch (8) des Flanschpaares (7, 8) an den ersten Flansch (7) anstoßend oder gering zu diesem beabstandet, mit einer Kehlnaht (18) angeordnet wird insbesondere mit einem Abstand beabstandet wird, der der Breite eines Trennwerkzeuges entspricht wobei die Kehlnaht dem ersten Flansch des Flanschpaares gegenüber liegt und anschließend zwischen den beiden Flanschen (7, 8) des Flanschpaares die Trennung erfolgt, wobei der zweite Flansch (8) nach der Trennung mit der zweiten Kehlnaht (18) am Rohrkörper befestigt wird.

6. Verfahren nach einem der Ansprüche 1 bis 4, **dadurch gekennzeichnet, dass** ein Flansch (7, 8) oder beide Flansche (7, 8) auf eine Innen- oder Außenseite der Rohrwandung aufgesetzt werden, wobei die Flansche (7, 8) mit je einer Stirnfläche (15) derart aufgesetzt sind und die Stirnfläche (15) derart verläuft, dass ein keilförmiger Spalt mit der Rohrwandung gebildet wird und anschließend die Flansche nacheinander oder gleichzeitig mit einer Vollanschlussnaht an die Wandung (4) angeschweißt werden.

7. Verfahren nach einem der vorhergehenden Ansprüche, **dadurch gekennzeichnet, dass** die Trennung so erfolgt, dass die axiale Kante der Halbschale mit der Stoßkante des Flansches fluchtet, sodass bei einem zu errichtenden Turmbauwerk die Flansche der benachbarten Halbschalen unmittelbar aneinander anliegend angeordnet sind.

8. Verfahren nach einem der vorhergehenden Ansprüche, **dadurch gekennzeichnet, dass** die Trennung derart erfolgt, dass bei Flanschen, die mit einem Vollanschluss aufgeschweißt sind und eine gemeinsame Schweißnahtwurzel besitzen, die Schweißnahtwurzel bei der Trennung beseitigt wird, so dass die Flansche (7, 8) beziehungsweise die Teilschalen (6a) voneinander abhebbar sind.

9. Verfahren nach einem der vorhergehenden Ansprüche, **dadurch gekennzeichnet, dass** die Flanschpaare bzw. die Flansche aneinander anliegender Turmbauwerksschalen mit Schraubbolzen, Nieten, Schrauben mit Presshülsen oder Schließringbolzen verbunden werden.

10. Verfahren nach einem der vorhergehenden Ansprüche,
**dadurch gekennzeichnet, dass**
das Turmbauwerk an einem axialen Ende einen ersten Durchmesser aufweist und einem axial gegenüber liegenden Ende einen zweiten Durchmesser aufweist, wobei der erste Durchmesser größer als der zweite Durchmesser ist.

11. Verfahren nach einem der vorhergehenden Ansprüche,
**dadurch gekennzeichnet, dass**
der geringere Durchmesser so gewählt wird, dass er dem Standarddurchmesser von Windenergieanlagen in ihrem Fuß entspricht, sodass ein Standardturm einer Windenergieanlage auf den Bereich mit dem geringeren Durchmesser des Rohrbauwerks aufsetzbar und befestigbar ist.

12. Verfahren nach einem der vorhergehenden Ansprüche, **dadurch gekennzeichnet, dass** das Rohrturmbauwerk (6) aus zwei bis vierzehn vorgefertigten Teilschalen ausgebildet ist und einen Fußdurchmesser von 4 bis 14 m und einen Kopfdurchmesser 2,5 bis 10 m besitzt.

## Claims

1. Method for erecting a tubular tower construction, wherein
- steel sheet is bent into a tube section (1a, b) which is essentially annular in cross-section and is welded along a longitudinal edge (2) to form a closed tube (1a, b),
- at the tube (6), along planned axial lines of separation, respectively one pair of axial flanges (7, 8) are welded inside or outside onto the tube wall, wherein respectively one pair of flanges (7, 8) are arranged extending axially and lying side by side in the circumferential direction,
- wherein the tube body (6) is separated along planned lines of separation (20), which extend between two flanges (7, 8) of a flange pair, so that at least two partial shells (6a) of the tube body are formed, which comprise respectively one flange (7, 8) along axial edges (11) and
- for erecting the tower construction, the partial shells (6a) are arranged one against the other and connected through the flanges (7, 8) of a pair of flanges to form a tube body.

2. Method according to claim 1, **characterized in that**
a plurality of tube sections (1a), which are annular in cross-section, are connected along common circumferential edges (5) to a longitudinally extending tube body (6).

3. Method according to claim 1 or 2, **characterized in that**
the tube sections (1a) are arranged in such a way that their respective flange pairs or flanges and / or longitudinal weld seams are offset in the axial direction and are not aligned with one another.

4. Method according to one of the preceding claims, **characterized in that**
Annular frames/annular frame segments (40) and / or annular flanges or annular flange segments (24, 31) are arranged between the flanges (7, 8) of a partial shell (6a), wherein the annular flanges (24, 31) are arranged for the connection of axially successive tube sections (6) and are aligned with radially extending circumferential edges.

5. Method according to one of the preceding claims, **characterized in that**
first a flange (7) of a flange pair (7, 8) is placed on an inner or outer side (14) of the tube wall (4) and is connected with the tube body by means of a first fillet seam (18) along a joint edge, and then the opposite joint edge is welded together with the tube body by means of a fillet seam (18), and subsequently the second flange (8) of the pair of flanges (7, 8) is arranged abutting the first flange (7) or slightly spaced apart therefrom by means of a fillet seam (18), in particular spaced apart with a distance corresponding to the width of a separation tool, wherein the fillet seam is opposite the first flange of the pair of flanges and afterwards the separation takes place between the two flanges (7, 8) of the pair of flanges, wherein the second flange (8) is attached to the tube body by means of the second fillet seam (18) after the separation.

6. Method according to one of claims 1 to 4, **characterized in that** a flange (7, 8) or both flanges (7, 8) are placed on an inner or outer side of the tube wall, wherein the flanges (7, 8) are respectively placed with an abutting face (15) in such a way, and the abutting face (15) extends in such a way, that a wedge-shaped gap is formed with the tube wall, and the flanges are subsequently welded to the wall (4) one after the other or simultaneously with a full connection seam.

7. Method according to one of the preceding claims,
**characterized in that** the separation takes place in such a way that the axial edge of the half-shell is aligned with the abutting edge of the flange so that the flanges of the adjacent half-shells are arranged immediately adjacent to one another when a tower construction is to be erected.

8. Method according to one of the preceding claims,
**characterized in that** the separation takes place in such a way that in the case of flanges which are welded with a full connection and have a common weld seam root the weld seam root is removed during the separation so that the flanges (7, 8) or the partial shells (6a) can be lifted from each other.

9. Method according to one of the preceding claims,
**characterized in that** the flange pairs or the flanges of adjoining tower construction shells are connected with bolts, rivets, screws with press sleeves or locking ring bolts.

10. Method according to one of the preceding claims,
**characterized in that** the tower construction has a first diameter at an axial end and a second diameter at an axially opposite end, the first diameter being greater than the second diameter.

11. Method according to one of the preceding claims,
**characterized in that** the smaller diameter is chosen so as to correspond to the standard diameter of wind energy installations in their foot, so that a standard tower of a wind energy installation can be placed on the section with the smaller diameter of the tube structure and fastened.

12. Method according to one of the preceding claims,
**characterized in that** the tubular tower construction (6) is formed from two to fourteen prefabricated partial shells and has a foot diameter of 4 to 14 m and a head diameter of 2.5 to 10 m.

## Revendications

1. Procédé pour l'érection d'une construction de tour tubulaire,
dans lequel
- une tôle d'acier est pliée en une section de tube (1a, b) de forme sensiblement annulaire en section transversale et soudée le long d'un bord longitudinal (2) en un tube fermé (1a, 1b),
- au tube (6), le long de lignes de séparation axiales prévues, respectivement une paire de brides axiales (7, 8) est soudée à l'intérieur ou à l'extérieur sur la paroi du tube, respectivement une paire de brides (7, 8) étant disposée s'étendant axialement l'une à côté de l'autre dans la direction circonférentielle,
- dans lequel, le long de lignes de séparation axiales prévues (20), qui s'étendent entre deux brides (7, 8) d'une paire de brides, le corps tubulaire (6) est séparé, de sorte qu'au moins deux coques partielles (6a) du corps tubulaire sont formées, qui présentent respectivement une bride (7, 8) le long de bords axiaux (11) et
- pour la construction de la construction de tour, les coques partielles (6a) sont agencées ensemble au moyen des brides d'une paire de brides et sont reliées à travers les brides (7, 8) d'une paire de brides respective en un corps tubulaire.

2. Procédé selon la revendication 1,
**caractérisé en ce**
**qu'**une pluralité de sections de tube annulaires en section transversale (1a) sont reliées le long de bords radiaux communs s'étendant circonférentiellement et se rencontrant (5) pour former un corps tubulaire (6) s'étendant longitudinalement.

3. Procédé selon la revendication 1 ou 2,
**caractérisé en ce que**
les sections de tube (1a) sont agencées de telle manière que leurs paires de brides ou brides respectives et / ou soudures longitudinales sont décalés en direction axiale et ne sont pas disposées dans un alignement les unes aux autres.

4. Procédé selon l'une quelconque des revendications précédentes,
**caractérisé en ce**
**qu'**entre les brides (7, 8) d'une coque partielle (6a) des arceaux annulaires / des segments d'arceaux annulaires (40) et / ou des brides annulaires ou des segments débridés annulaires (24, 31) sont disposés, les brides annulaires (24, 31) étant agencées pour le reliage de sections de tube (6) axialement successives et en alignement avec des bords circonférentiels s'étendant radialement.

5. Procédé selon l'une quelconque des revendications précédentes, **caractérisé en ce que**
d'abord une bride (7) d'une paire de brides (7, 8) est posée sur une face intérieure ou extérieure (14) de la paroi de tube (4) et reliée au corps tubulaire avec une première soudure d'angle (18) le long d'un bord de butée, et
ensuite le bord de butée opposé est soudé avec le corps tubulaire avec une soudure d'angle (18), et
après la deuxième bride (8) de la paire de brides (7, 8) est disposé en butée à la première bride (7) ou légèrement espacé de celle-ci avec une soudure d'angle (18), en particulier espacé avec une distance correspondant à la largeur d'un outil de coupe, la soudure d'angle étant disposée opposé à la première bride de la paire de brides et
puis entre les deux brides (7, 8) de la paire de brides la séparation est réalisée,
dans lequel, après la séparation, la deuxième bride (8) est fixée au corps tubulaire avec la deuxième soudure d'angle (18).

6. Procédé selon l'une quelconque des revendications 1 à 4, **caractérisé en ce**
**qu'**une bride (7, 8) ou les deux brides (7, 8) sont placés sur un côté intérieur ou extérieur de la paroi de tube, les brides (7, 8) avec une face frontale (15) sont respectivement placées de telle manière, et la face frontale (15) s'étend de telle manière, qu'une fente en forme de coin est formée avec la paroi de tube et ensuite les brides sont soudées successivement ou simultanément à la paroi (4) avec une soudure de connexion continue.

7. Procédé selon l'une quelconque des revendications précédentes, **caractérisé en ce que**
la séparation est effectuée de telle sorte que le bord axial de la demi-coque est aligné avec le bord de butée de la bride, de sorte que lorsque une construction de tour est à être érigée, les brides de la demi-coque adjacente sont disposées directement adjacentes les unes aux autres.

8. Procédé selon l'une quelconque des revendications précédentes, **caractérisé en ce que**
la séparation est effectuée de telle sorte que chez des brides soudées avec une connexion continue et ayant une racine de soudure commune, la racine de soudure est éliminée lors de la séparation, de sorte que les brides (7, 8) ou les coquilles partielles (6a) peuvent être levées les unes des autres.

9. Procédé selon l'une quelconque des revendications précédentes, **caractérisé en ce que**
les paires de brides ou les brides de coquilles de construction de tour en butée l'une à l'autre sont reliées avec des boulons, des rivets, des vis avec douilles de serrage ou des boulons à sertir.

10. Procédé selon l'une quelconque des revendications précédentes, **caractérisé en ce que**
la construction de tour a un premier diamètre à une extrémité axiale et un second diamètre à une extrémité axialement opposée, le premier diamètre étant supérieur au second diamètre.

11. Procédé selon l'une quelconque des revendications précédentes, **caractérisé en ce que**
le plus petit diamètre est choisi de telle sorte qu'il correspond au diamètre standard des éoliennes dans leurs pieds, de sorte qu'une tour standard d'une éolienne peut être placé et fixé sur la section avec le diamètre inférieur de la construction tubulaire.

12. Procédé selon l'une quelconque des revendications précédentes, **caractérisé en ce que**
la construction de tour tubulaire (6) est formée à partir de deux à quatorze coquilles partielles préfabriquées et a un diamètre de pieds de 4 à 14 m et un diamètre de tête de 2,5 et 10 m.
